Europäisches Patentamt

European Patent Office

Office européen des brevets

(11) Veröffentlichungsnummer: **0 637 192 A1**

## (12) EUROPÄISCHE PATENTANMELDUNG

(21) Anmeldenummer: **94111727.7**

(22) Anmeldetag: **27.07.94**

(30) Priorität: **29.07.93 DE 4325515**

(43) Veröffentlichungstag der Anmeldung:
**01.02.95 Patentblatt 95/05**

(84) Benannte Vertragsstaaten:
**AT DE ES FR GB**

(51) Int. Cl.⁶: **H05B 1/02**, H05B 3/74,
G01K 5/52

(71) Anmelder: **Bosch-Siemens Hausgeräte GmbH
Hochstrasse 17
D-81669 München (DE)**

(72) Erfinder: **Karlheinz, Henry, Dipl.-Ing.
Meisenweg 2
D-83308 Trostberg (DE)**

(54) **Kochfeldtemperaturanzeige.**

(57) Die Erfindung bezieht sich auf eine Anordnung zur Kochfeld-Temperaturanzeige bei Glaskeramik-Kochflächen, wobei die unterhalb der Glaskeramik-Trägerfläche angeordneten Strahlungs-Heizelemente einen Temperaturbegrenzer besitzen, der mit einem Reglerkopf verbunden ist, wobei der als Temperaturbegrenzer (3) angeordnete Stabregler als Analogwertgeber für eine Auswerteeinheit (13) fungiert, die Auswerteeinheit (13) mit einer Elektronikeinheit (14) verbunden ist und die Elektronikeinheit (14) ausgangsseitig auf eine Analog-Digitalanzeige (15) geführt ist.

Fig. 2

EP 0 637 192 A1

Die Erfindung bezieht sich auf eine Anordnung zur Kochfeldtemperaturanzeige bei Glaskeramik-Kochflächen, wobei die unterhalb der Glaskeramik-Trägerfläche angeordneten Strahlungsheizelemente einen Temperaturbegrenzer besitzen, der mit einem Reglerkopf verbunden ist.

Eine derartige Anordnung ist aus der DE 40 02 322 bekannt. Bei vorbekannten Kochfeldern, beispielsweise Kochfeldern gemäß DE-PS 29 51 410, ist eine Einrichtung für die sogenannte Restwärmeanzeige vorgesehen, in Form eines temperaturabhängigen Schalters, der zur Steuerung eines Leucht- oder Signalorgans ebenso dienen kann. Durch die genannten Patentschriften wirkt in vorteilhafter Weise hierbei, daß bei einem derartigen Glaskeramik-Kochfeld das Sicherheits-Temperaturbegrenzer-Bauelement als elektrisches Anschlußelement herangezogen wird. Dieses Bauelement ist in einfacher Weise mit einem zusätzlichen elektrischen Kontaktarm versehen und kann als Träger für eine Lichtquelle für den Lichtleiter dienen. Dabei kann die Konstruktion der Leuchteinrichtung für den sogenannten Restwärmeanzeiger dadurch vereinfacht werden, daß das Leuchtorgan mit dem Temperaturfühler des vorgenannten Sicherheits-Temperaturbegrenzers baulich vereinigt wird.

Die Aufgabe der Erfindung besteht darin, Strahlungsheizkörper für Glaskeramik-Kochfelder so auszustatten, daß eine kontinuierliche Temperaturanzeige der Kochzone zwischen 60°C und 550°C anwählbar möglich ist.

Die erfindungsgemäße Anordnung zur Lösung dieser Aufgäbe ist dadurch gekennzeichnet, daß der als Temperaturbegrenzer angeordnete Stabregler als Analog-Wertgeber für eine Auswerteeinheit fungiert, daß die Auswerteeinheit mit einer elektronischen Einheit verbunden ist und daß die Elektronikeinheit ausgangsseitig auf eine Analog-Digitalanzeige geführt ist.

Vorteilhafte Ausgestaltungen der Erfindung sind in den Unteransprüchen enthalten. Ein Ausführungsbeispiel nach der Erfindung ist im folgenden anhand der Zeichnungen näher beschrieben. Es zeigt:

Fig. 1 ein Strahlungsheizelement für Glaskeramik-Kochfelder nach dem Stand der Technik,

Fig. 2 ein Strahlungsheizelement gemäß der Erfindung.

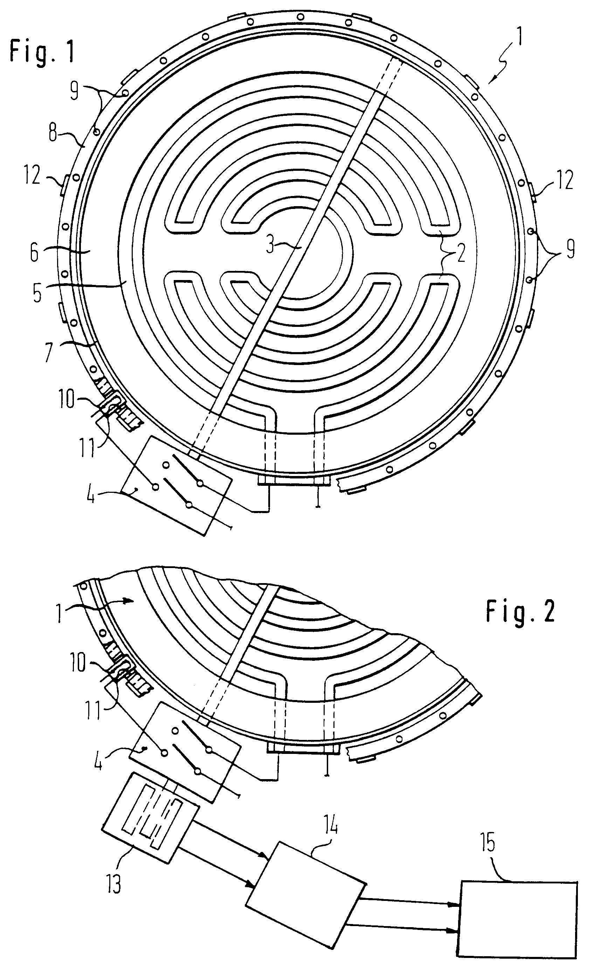

Figur 1 und Figur 2 lassen eine Kochstelle (Strahlungsheizung) 1, eine Heizwicklung 2, einen Temperaturfühler 3, einen Temperaturbegrenzer 4, eine thermische Isolierung 5, eine Wand zur thermischen Isoliereung 6, einen topfförmigen Mantel 7, einen Lichtleiter 8, eine Aussparung als Reflexionsfläche 9, einen Lichtgeber 10, eine Ausnehmung am Lichtgeber 11, eine Halterung für den Lichtleiter 12, eine Auswerteeinheit 13, eine Elektronikeinheit 14 und eine Analog-Digitalanzeige 15 erkennen.

Figur 1 zeigt eine Kochstelle (Strahlungsheizung) 1, wie sie gemäß dem Stand der Technik unter Glaskeramik-Kochflächen als Strahlungsheizung angeordnet ist. Die Strahlungsheizung 1 besteht in an sich bekannter Weise aus einem topfförmigen, metallischen Mantel 7, einer darin angeordneten thermischen Isolierung 5 und einer von dieser Isolierung getragenen Heizwicklung 2. In der senkrechten, ringförmig umlaufenden Wand 6 des topfförmigen Isolierstoffträgers 5 ist eine ebenfalls umlaufende, zur Glaskeramik-Kochfläche hin offene Ausnehmung 11 angeordnet. In dieser Ausnehmung 11 ist ein Leuchtorgan, eine Glimmlampe 10 angeordnet. Der Lichtgeber 10 speist einen Lichtleiter 8, in welchen Aussparungen 9 als Reflexionsflächen vorhanden sind.

Gemäß Figur 2 ist der als Temperaturbegrenzer 3 angeordnete Stabregler als Analogwertgeber für eine Auswerteeinheit 13 vorgesehen, wobei die Auswerteeinheit 13 mit einer Elektkronikeinheit 14 verbunden ist und die Elektronikeinheit 14 ausgangsseitig auf eine Analog-Digitalanzeige 15 geführt ist. Es ist erkennbar, daß die Auswerteeinheit 13 durch die thermisch bedingte Längenänderung des Stabreglers 3 ausgangsseitig ein elektrisches Signal, das proportional zur Kochflächentemperatur ist, bereitstellt. Dabei ist weiterhin dargestellt, daß gemäß Figur 2 die Auswerteeinheit 13 vorzugsweise ein induktiver Wegaufnehmer ist. Induktive Wegaufnehmer nutzen die wegabhängige Beeinflussung der Induktion von wechselspannungs-gespeisten Spulensystemen durch Verschiebung von als Spulenkern wirkenden Materialien. Die dabei erzielbare Wegauflösung ist besser als 0,1 mm, die Meßlängen können zwischen 0,1 bis zu mehreren 100 mm betragen.

Eine weitere Möglichkeit der Ausgestaltung von Wegaufnehmern besteht in der Anwendung von magnetischen Wegaufnehmern. Der nicht dargestellte magnetische Wegaufnehmer basiert auf der wegabhängigen Beeinflussung magnetischer Effekte in geeigneten Sensoren, beispielsweise Hall-Sensoren.

Die mit der Auswerteeinheit 13 verbundene Elektronikeinheit 14 arbeitet als Analog-Digitalumsetzer. Der Analog-Digitalumsetzer 14 wandelt die thermisch bedingten Längenänderungen des Stabreglers 3 in der Funktion $\Delta S$ = Funktion von $\Delta T$ genügende Temperaturwerte, die der Kochflächentemperatur entsprechen, wobei er aus der elektrischen Eingangsgröße digital verschlüsselte Temperaturwerte bildet. Damit ist es möglich, daß die durch die Elektronikeinheit 14 der Analog-Digitalanzeige 15 zugeführten Temperaturwerte der jeweiligen Kochstelle eine kontinuierliche Temperaturanzeige von Betriebswärme- und Restwärmeumfang ermöglichen. Der den Temperaturbegrenzer 4 speisende Temperaturfühler 3 dient gleichzeitig als sich ändernder Anker, also wegabhängige Beeinflussung der Induktion, für den induktiven Wegaufnehmer in der Auswerteeinheit 13, wobei der Temperaturbegrenzer 4 mit der Lichtquelle 10, die sich in einer Ausnehmung 11 des Lichtleiters 8 befindet, über spezielle Kontakte verbunden ist. Die kontinuierliche Anzeige der Temperaturskala von 60° C bis ca. 550° C, die über die Analog-Digitalanzeige 15 erfolgt, ist, wie beschrieben, vom Temperaturbegrenzer 4 entkoppelt. Der Temperaturbegrenzer 4 arbeitet exakt als Sicherheits-Temperaturbegrenzer für das Glaskeramik-Kochfeld, ohne die sonst übliche Funktion der Restwärmeanzeige auszuüben.

**Patentansprüche**

1.  Kochfeld-Temperaturanzeige bei Glaskeramik-Kochflächen, wobei die unterhalb der Glaskeramik-Trägerfläche angeordneten Strahlungs-Heizelemente einen Temperaturbegrenzer besitzen, der mit einem Reglerkopf verbunden ist, **dadurch gekennzeichnet,** daß der als Temperaturbegrenzer (3) angeordnete Stabregler als Analogwertgeber für eine Auswerteeinheit (13) fungiert, daß die Auswerteeinheit (13) mit einer Elektronikeinheit (14) verbunden ist, und daß die Elektronikeinheit (14) ausgangsseitig auf eine Analog-Digitalanzeige (15) geführt ist.

2.  Kochfeld-Temperaturanzeige nach Anspruch 1, dadurch gekennzeichnet, daß die Auswerteeinheit (13) durch die thermisch bedingte Längenänderung des Stabreglers (3) ausgangsseitig ein elektrisches Signal, das proportional zur Kochflächentemperatur ist, bereitstellt.

3.  Kochfeld-Temperaturanzeige nach Anspruch 1, 2, dadurch gekennzeichnet, daß die Auswerteeinheit (13) vorzugsweise ein induktiver Wegaufnehmer ist.

4.  Kochfeld-Temperaturanzeige nach Anspruch 1, 2, dadurch gekennzeichnet, daß die Auswerteeinheit (13) ein magnetischer Wegaufnehmer ist.

5.  Kochfeld-Temperaturanzeige nach Anspruch 1, dadurch gekennzeichnet, daß die Elektronikeinheit (14) ein Analog-Digitalumsetzer ist.

6.  Kochfeld-Temperaturanzeige nach Anspruch 1, dadurch gekennzeichnet, daß der Analog-Digitalumsetzer die thermisch bedingten Längenänderungen des Stabreglers (3) in der Funktion $\Delta S = F$ von $\Delta T$ genügende Temperaturwerte, die der Kochflächentemperatur entsprechen, wandelt, wobei er aus der elektrischen Eingangsgröße digital verschlüsselte Temperaturwerte bildet.

7.  Kochfeld-Temperaturanzeige nach Anspruch 1, dadurch gekennzeichnet, daß die durch die Elektronikeinheit (14) der Analog-Digitalanzeige (15) zugeführten Temperaturwerte der jeweiligen Kochstelle eine kontinuierliche Temperaturanzeige von Betriebswärme- und Restwarmeumfang ermöglichen.

8.  Kochfeld-Temperaturanzeige nach Anspruch 1, 2, dadurch gekennzeichnet, daß der Temperaturfühler (3) als sich ändernder Anker für den induktiven Wegaufnehmer in der Auswerteeinheit (13) benutzbar ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-23 41 998 (VEB KOMBINAT MESS- UND REGELUNGSTECHNIK) <br> * Anspruch 1 * <br> --- | 1,3 | H05B1/02 <br> H05B3/74 <br> G01K5/52 |
| A | NL-A-7 511 060 (G. SEFFINGA) <br> --- | | |
| A | US-A-3 906 424 (THERM-O-DISC INC.) <br> ----- | | |

**RECHERCHIERTE SACHGEBIETE (Int.Cl.6)**

H05B
G01K

Der vorliegende Recherchenbericht wurde für alle Patentansprüche erstellt

| Recherchenort | Abschlußdatum der Recherche | Prüfer |
|---|---|---|
| DEN HAAG | 16. November 1994 | De Smet, F |